**Europäisches Patentamt**

**European Patent Office**

**Office européen des brevets**

(19)

(11) Veröffentlichungsnummer: **0 335 885 B1**

(12) **EUROPÄISCHE PATENTSCHRIFT**

(45) Veröffentlichungstag der Patentschrift:
27.03.91 Patentblatt 91/13

(51) Int. Cl.⁵: **B60K 7/00, B60K 17/04,**
**B60K 17/22**

(21) Anmeldenummer: **87907945.7**

(22) Anmeldetag: **24.10.87**

(86) Internationale Anmeldenummer:
**PCT/EP87/00634**

(87) Internationale Veröffentlichungsnummer:
**WO 88/04241 16.06.88 Gazette 88/13**

(54) **RADANTRIEB FÜR ELEKTROFAHRZEUGE.**

(30) Priorität: **01.12.86 DE 3641022**

(43) Veröffentlichungstag der Anmeldung:
**11.10.89 Patentblatt 89/41**

(45) Bekanntmachung des Hinweises auf die
Patenterteilung:
**27.03.91 Patentblatt 91/13**

(84) Benannte Vertragsstaaten:
**FR GB IT SE**

(56) Entgegenhaltungen:
**DE-U- 8 124 384**
**FR-A- 1 484 716**
**GB-A- 935 201**
**US-A- 3 469 646**
**US-A- 3 822 757**

(73) Patentinhaber: **Lechmotoren Gmbh**
**Südliche Römerstr. 12-16**
**W-8925 Altenstadt/Schongau (DE)**

(72) Erfinder: **WEINRETTER, Georg**
**Meisthuberstr. 15**
**W-8070 Ingolstadt (DE)**

(74) Vertreter: **Ernicke, Hans-Dieter, Dipl.-Ing. et al**
**Patentanwälte Dipl.-Ing. H.-D. Ernicke**
**Dipl.-Ing. Klaus Ernicke Schwibbogenplatz 2b**
**W-8900 Augsburg (DE)**

## Beschreibung

Die Erfindung betrifft einen Radantrieb für Elektrofahrzeuge, insbesondere Hubstapler, wobei eine von einem in Radnähe mit vertikaler Drehachse angeordneten Elektromotor angetriebene Antriebswelle eine in einer gehäusefesten Nabe drehbar gelagerte Radachse antreibt und wobei ein Rad unter einem horizontalen Rahmen angeordnet ist, der mit einem auf der Innenseite des Rads etwa vertikal erstreckten Getriebegehäuse fest verbunden ist.

Ein derartiger Radantrieb ist aus der DE-C 31 33 027 bekannt. Dort ist der Elektromotor allerdings oberhalb des horizontalen Rahmens angeordnet und über eine oberhalb des Rads angeordnete Stirnrad-Getriebestufe und eine von dort auf der Radinnenseite senkrecht nach unten geführte Antriebswelle über eine Kegelrad-Getriebestufe mit der Radachse treibend verbunden. Da hier neben dem horizontalen Rahmen auch die Stirnrad-Getriebestufe und der Elektromotor über dem Rad angeordnet sind, eignet sich der bekannte Radantrieb nur für solche Anwendungsfälle, bei denen der am Fahrzeug vorgesehene Einbauraum in der Höhe nicht begrenzt ist. Überdies setzt der bekannte Radantrieb eine konstruktive Anpassung an den jeweiligen Raddurchmesser voraus, d. h. wenigstens das Getriebegehäuse einschließlich der darin untergebrachten Getriebeteile kann jeweils nur für einen bestimmten Raddurchmesser verwendet werden.

Bei zahlreichen bekannten Radantrieben (DE-C 15 80 258 und DE-C 25 11 452, GB-A 1,120,663, FR-A 1,298,663) sind in Verlängerung der Radachse angeordnete elektromotorische Antriebe vorgesehen, bei welchen das Drehmoment auf das Rad über eine mit der Radfelge drehfest verbundene, in ihrer Herstellung aufwendige Innenverzahnung übertragen wird. Für diese bekannten Radnabenantriebe ist ferner typisch, daß Teile des Elektromotors als Baueinheit in die Radfelge integriert sind, so daß die Konstruktion jeweils nur für einen bestimmten Raddurchmesser ausgelegt ist.

Demgegenüber liegt der vorliegenden Erfindung die Aufgabe zugrunde, einen Radantrieb der gattungsgemäßen Art zu schaffen, der eine geringe Bauhöhe erfordert, einfach herzustellen ist, und für mehrere Raddurchmesser geeignet ist.

Erfindungsgemäß wird diese Aufgabe dadurch gelöst,
- daß eine Kegelrad-Getriebestufe zwischen Elektromotor und Antriebswelle vorgesehen ist,
- daß die Drehachse des Elektromotors in einer vertikalen Ebene auf der dem Rad abgewandten Seite des Getriebegehäuses verläuft, und
- daß im Getriebegehäuse wenigstens eine Stirnrad-Getriebestufe aus außenverzahnten Stirnrädern, von denen eines auf der Radachse sitzt, aufgenommen ist.

Dieser Vorschlag ermöglicht die von der übrigen Konstruktion unabhängige Anordnung des Elektromotors an der Innenseite des Getriebegehäuses. Dieses ist so ausgelegt, daß für unterschiedliche Raddurchmesser jeweils nur die Zahnräder der Stirnrad-Getriebestufe ausgetauscht, d. h. in ihrer Zähnezahl an den jeweiligen Raddurchmesser angepaßt werden. Neben der Kegelrad-Getriebestufe umfaßt die Antriebskette ausschließlich außen verzahnte Stirnräder, d. h. eine in der Herstellung teuere Innenverzahnung entfällt. Da über dem Rad lediglich der horizontale, die Dimensionen eines üblichen Anschlußflansches aufweisende Rahmen angeordnet ist, kann die gesamte Bauhöhe des Radantriebs spürbar reduziert werden ; dazu trägt besonders auch die von der Radfelge unabhängige Anordnung des Elektromotors bei.

Der erfindungsgemäß vorgeschlagene Radantrieb eignet sich insbesondere für die bei Hubstaplern oder sog. führerlosen Transportsystemen gebräuchlichen Raddurchmesser von 210 bzw. 270 mm. Lediglich für den Fall, daß auch eine größere Motorleistung gewünscht wird, wäre bei größeren radialen Abmessungen des Elektromotors noch eine längere Antriebswelle einzubauen. Außerdem besteht die Möglichkeit einer Übersetzungsänderung im bereich der Kegelrad-Getriebestufe.

Infolge der praktisch freistehenden Anordnung des Elektromotors parallel zur Innenseite des Getriebegehäuses, mit entsprechend waagrechter Anordnung der Antriebswelle bereitet die Wärmeableitung – im Gegensatz zu den bekannten Radnabenantrieben – keinerlei Probleme. Während der Abtrieb des Elektromotors nach unten weist, liegt der Kollektor an dem vom Boden entfernten Ende des Elektromotors, so daß eine schädliche Staubeinwirkung nicht zu befürchten ist ; der Motor kann somit bei geringem Bürstenverschleiß und zwecks optimaler Kühlung sogar ohne Spannband betrieben werden.

Der horizontale Rahmen ist entweder fest mit dem Fahrzeugrahmen verbunden oder – bei lenkbaren Rädern – an einem im Fahrzeugrahmen gelagerten, um eine vertikale Achse drehbaren Drehkranz, z. B. in Form eines Kranzrollenlagers, befestigt.

Als Elektromotor eignet sich insbesondere ein Niederspannungs-Gleichstrommotor. Da die Bremse auf der Motorwelle wirksam ist, sind die auftretenden Bremsmomente verhältnismäßig gering, wodurch sich die Möglichkeit einer Reduzierung der Baugröße des Getriebes ergibt.

Nach einer bevorzugten Ausführungsform ist vorgesehen, daß die Antriebswelle mit ihrem äußeren Ende an der Außenwand des Getriebegehäuses und ferner mittels eines Radial-Axiallagers in der Innenwand des Getriebegehäuses gelagert ist, und daß das innere Ende der Antriebswelle das Kegelritzel trägt, welches mit dem Kegelrad auf der Drehachse des Elektromotors die Kegelrad-Getriebestufe bildet.

Gemäß dieser Ausführungsform ist die Antriebswelle somit durch die Innenwand des Getriebegehäuses hindurch geführt, so daß sie das Verbindungselement zwischen der Kegelrad-Getriebestufe einerseits und der Stirnrad-Getriebestufe andererseits bildet.

Entsprechend dieser Anordnung ist zweckmäßig, daß die Kegelrad-Getriebestufe in einem gesonderten, in periphärer Lage an der Innenseite des Getriebegehäuses dichtend angeflanschten Gehäuseteil eingebaut ist, und daß am Gehäuseteil der Elektromotor befestigt ist. Wenn gemäß dieser einfachen Bauart der Gehäuseteil mit der Innenseite des Getriebegehäuses verschraubt ist, so ergeben sich keine besonderen Anforderungen hinsichtlich der Ausführung der Dichtungen zwischen dem Gehäuseteil und dem Getriebegehäuse ; es können einfache Plandichtungen verwendet werden.

Entsprechend der periphären Anordnung der Kegelradstufe, ist vorzugsweise vorgesehen, daß der Gehäuseteil an der Unterseite des Getriebegehäuses angeordnet ist und oben einen waagrechten Deckelflansch besitzt, auf welchem der Elektromotor mit oben angeordnetem Kollektor aufgesetzt ist.

Zum Erzielen der gewünschten Untersetzung bei niedriger Bauhöhe des Getriebegehäuses wird nach einer weiteren Ausgestaltung der Erfindung vorgeschlagen, daß im Getriebegehäuse zwei Stirnrad-Getriebestufen vorgesehen sind, wobei eine Zwischenwelle für je ein Stirnrad beider Getriebestufen in einem zur Nabe exzentrischen Lagerhals gelagert ist, welcher wie die Nabe mit der Außenwand des Getriebegehäuses einstückig verbunden ist. Die Außenwand des Getriebegehäuses enthält also neben der Nabe für die Radachse den Lagerhals für die Zwischenwelle und außerdem ein Lager für das äußere Ende der Antriebswelle.

Zwecks Reduzierung der Abmessungen des Radantriebs in einer Richtung parallel zur Radachse ist vorgesehen, daß zumindest die Nabe und der Lagerhals in das Innere der Radfelge eintreten, wobei die Felge auf einem über die Nabe vorspringenden Ende der Radachse drehfest aufgenommen ist.

Durch die Verwendung einfacher Stirnradverzahnungen besteht die Möglichkeit, diese zumindest teilweise aus Kunststoff herzustellen. In diesem Sinne ist vorgesehen, daß zumindest das große, mit dem Stirnradritzel auf der Antriebswelle kämmende Stirnrad als Kunststoff-Spritzgußteil hergestellt ist, wobei es mit der Zwischenwelle durch Umgießen derselben verbunden ist ; ein geeigneter Kunststoff ist Polyamid. Neben den niedrigen Herstellungskosten liegen die Vorteile einer derartigen Verzahnung in der Gewichtseinsparung und der Geräuschminderung. Zur weiteren Gewichtseinsparung kann das Getriebegehäuse statt wie üblich aus Gußeisen mit Kugelgraphit aus einer Aluminiumlegierung durch Warmpressen hergestellt sein. Eine ausreichende Festigkeit des Getriebegehäuses ist bei geeigneter Verrippung und wegen der mittigen Anordnung des Rads gewährleistet.

Im folgenden wird ein Ausführungsbeispiel der Erfindung anhand der Zeichnung erläutert. Es zeigt :

Fig. 1 einen vertikal geführten Axiaschnitt durch die Radachse, und

Fig. 2 eine Ansicht gemäß II-II der Fig. 1.

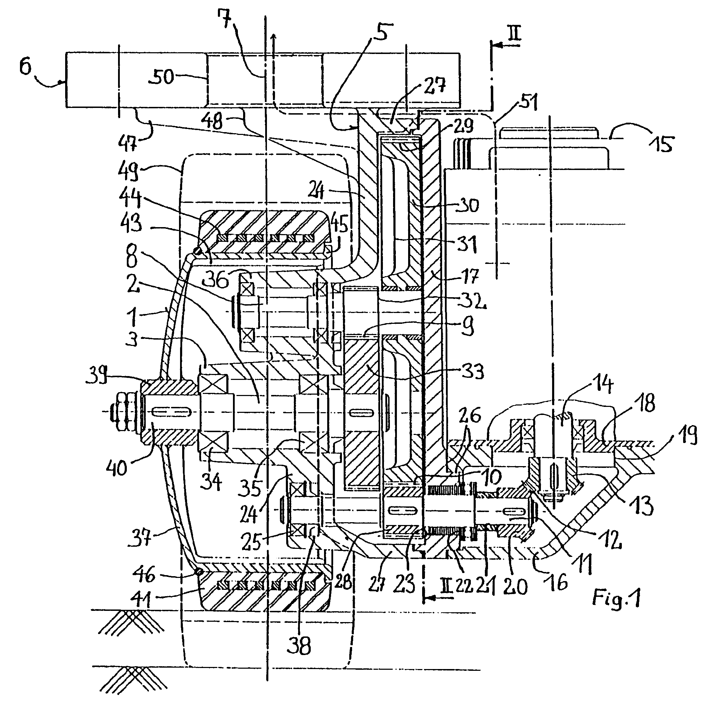

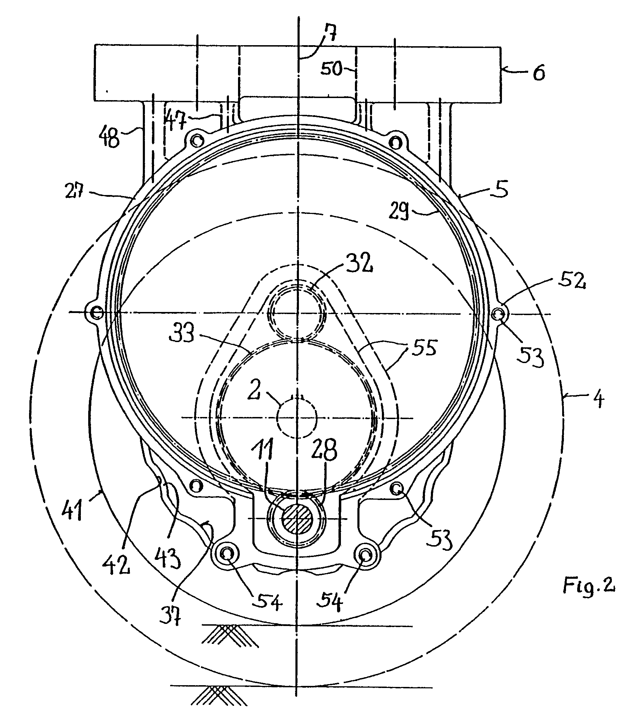

Gemäß den Figuren 1 und 2 sitzt ein Rad (1) auf einer Radachse (2), welche in einer Nabe (3) zweifach gelagert ist. Die Nabe (3) ist integriert in die Außenwand (24) eines Getriebegehäuses (5), welches oben mit einem horizontalen Rahmenteil (6) verbunden ist. Das Rahmenteil (6) ist an einem nicht dargestellten Fahrzeugrahmen entweder starr oder um eine vertikale Achse (7) drehbar befestigt. Im Getriebegehäuse (5) sind mittels einer Zwischenwelle (8) zwei Stirnrad-Getriebestufen aufgenommen. Die beiden Stirnräder einer ersten Getriebestufe (9) sitzen auf der Zwischenwelle (8) bzw. der Radachse (2); die beiden Stirnräder einer zweiten Getriebestufe (10) sitzen auf der Zwischenwelle (8) bzw. einer Antriebswelle (11). Die Antriebswelle (11) besorgt die Antriebsverbindung zwischen der zweiten Stirnrad-Getriebestufe (10) und einer Kegelrad-Getriebestufe (12), wobei eines der beiden Kegelräder gebildet ist durch ein Kegelrad (13), welches auf einer Drehachse (14) eines Elektromotors (15) sitzt. Der Elektromotor (15) sitzt mit vertikal verlaufender Drehachse (14) auf der Oberseite eines Gehäuseteils (16), welcher an der Innenseite der Innenwand (17) des Getriebegehäuses (5) dichtend angeflanscht ist.

Betrachtet man die Antriebsverbindung zum Rad (1) ausgehend vom Elektromotor (15), so ist dieser in bezug auf das Rad (1) bzw. das Getriebegehäuse (5) innenliegend und nahe an der Innenwand (17) des Getriebegehäuses (5) angeordnet. Es handelt sich um einen Niederspannungs-Gleichstrommotor mit Elektrobremse, dessen (nicht dargestellter) Kollektor oben und dessen, den Abtrieb bildendes Kegelrad (13) am unteren Ende der Drehachse (14) aufgekeilt ist. Die untere Stirnseite (18) des Gehäuses des Elektromotors (15) ist zentrisch in einem Deckelflansch (19) des Getriebeteils (16) aufgenommen und dort verschraubt. Das Kegelrad (13) bildet mit einem Kegelritzel (20) am inneren Ende der Antriebswelle (11) die Kegelrad-Getriebestufe (12). Die Kegelrad-Getriebestufe (12) bewirkt eine 90°-Umlenkung der Antriebsverbindung. Über eine Distanzhülse (21) ist das Kegelritzel (20) gegenüber einem Radial-Axiallager (22) abgestützt, welches in einer entsprechenden Lagerbohrung (23) am unteren Ende der Innenwand (17) des Gehäuseteils (5) aufgenommen ist. Die Antriebswelle (11) ist außerdem in der Außenwand (24) des Getriebegehäuses (5) mittels eines Radiallagers (25) am äußeren Ende der Antriebswelle (11) gelagert. Zur Klarstellung sei hier erwähnt, daß die Begriffe "außen" und "innen" in der vorliegenden Beschreibung in dem Sinne verstanden werden, daß, bezogen auf Fig. 1 in Richtung der Radachse (2) gesehen, mit "außen" die Richtung nach links und mit "innen" die Richtung nach rechts verstanden wird.

Die Innenwand (17) des Getriebegehäuses (5) ist als separates Bauteil ausgebildet, so daß die beiden Stirnrad- Getriebesätze (9, 10) bequem von innen her bei abgenommener Innenwand (17) des Getriebegehäuses (5) montiert werden können. Erst danach wird die Innenwand (17) des Getriebegehäuses unter Zwischenfügung einer entsprechenden Plandichtung aufgesetzt, wonach der Gehäuseteil (16) von innen her über die Antriebswelle (11) mit dem Kegelritzel (20) auf einen entsprechenden Sitz (26) am unteren Ende der Innenwand (17) des Getriebegehäuses (5) geschoben und dort zusammen mit der Innenwand (17) mit der Umfangswand (27) des Getriebegehäuses (5) verschraubt wird. Erst danach wird der Elektromotor (15) auf den Deckelflansch (19) des Gehäuseteils (16) aufgesetzt und mit diesem verschraubt, wobei das Kegelrad (13) am Abtriebsende der Drehachse (14) des Elektromotors (15) mit dem Kegelritzel (20) am zugeordneten Ende der Antriebswelle (11) mit ihren Kegelverzahnungen ineinander greifen. Damit die Kegelrad- Getriebestufe (12) einwandfrei läuft, ist ggf. ein Toleranzausgleich erforderlich, was vorteilhaft durch entsprechende Anpassung der Breite der Distanzhülse (21) oder auch durch federnde Ausbildung der Distanzhülse erzielt werden kann. Etwa mittig auf der Antriebswelle (11) sitzt drehfest ein Stirnradritzel (28), welches mit einem Stirnrad (29) die zweite Stirnrad-Getriebestufe (10) bildet. Das Stirnrad (29) ist aus Polyamid gegossen ; sein Radkörper (30) ist relativ dünnwandig ausgeführt und mittels radialer Rippen (31) versteift. Mit der Zwischenwelle (8) ist das Stirnrad (29) durch Angießen an das innere Ende der Zwischenwelle (8) drehfest verbunden. Auf der Zwischenwelle (8) sitzt ferner unmittelbar neben dem Stirnrad (29) ein stirnverzahntes Zwischenritzel (32), welches zusammen mit einem Zwischenstirnrad (33) die erste Stirnrad-Getriebestufe (9) bildet. Das Zwischenstirnrad (33) ist auf dem inneren Ende der Radachse (2) drehfest aufgenommen. Auf diese Weise wird die von der Kegelrad-Getriebestufe (12) auf die Antriebswelle (11) übertragene Drehzahl zweifach, nämlich sowohl im Bereich der zweiten Stirnrad-Getriebestufe (10) als auch der ersten Stirnrad-Getriebestufe (9) untersetzt, so daß die Radachse (2), bezogen auf die Drehzahl des Elektromotors (15) mit vorgegebener Untersetzung rotiert.

Während die Radachse (2) im Inneren der Nabe (3), welche Teil der Außenwand (24) des Getriebegehäuses (5) ist, zweifach gelagert ist, nämlich durch eine äußeres Radiallager (34) und ein inneres Radiallager (35) ist die Zwischenwelle (8) exzentrisch dazu in einem Lagerhals (36), welcher ebenfalls an die Außenwand (24) des Getriebegehäuses (5) angeformt ist, gelagert. Auch hier ist eine zweifache Lagerung vorgesehen, wobei hier wie bei den anderen Wellenlagerungen nicht näher beschriebene Klemmringe für die axiale Sicherung vorgesehen sind und die Lagerbohrungen durch nicht näher beschriebene Ringdichtungen abgedichtet sind.

Die Felge (37) des Rads (1) ist nach innen hin hohl ausgebildet. Im Inneren des Felgenhohlraums sind sowohl die zentrale Radnabe (3) als auch der Lagerhals (36) für die Lagerung der Zwischenwelle (8), als auch die Lagerbohrung (38) mit einem Radiallager (25) für die Lagerung des äußeren Endes der Antriebswelle (11) aufgenommen. Die Felge (37) besitzt einen eigenen Nabenteil (39), mit welchem sie auf einem über die Nabe (3) des Getriebegehäuses (5) nach außen vorspringenden Ende (40) der Radachse (2) drehfest aufgenommen ist.

Die Felge (37) trägt auf ihrem radialen Umfangsteil Reifen (41) aus Natur- oder Kunstgummi, welche auswechselbar auf die Felge (37) aufgepreßt werden und als Verdrehsicherung an ihrer Innenseite axiale Auswölbungen (42) aufweisen (siehe Fig. 2), welche in entsprechende Einwölbungen (43) der Felge (37) eingreifen. Die Reifen (41) sind durch eine Einlage aus einem ringförmigen Metallgitter (44) ausgesteift und in axialer Richtung zwischen einem inneren Bund (45), der Felge (37) und einem äußeren Klemmring (46), welcher in eine entsprechende Nut der Felge (37) eingreift, gesichert.

Der horizontale Rahmen (6) ist zusammen mit der Außenwand (24) und der Umfangswand (27) des Getriebegehäuses (5) als einstückiges Teil hergestellt, bevorzugt durch Warmverformen aus einer Aluminiumlegierung. Rippen (47, 48) dienen der Aussteifung zwischen dem horizontalen Rahmen (6) und der im wesentlichen vertikalen Außenwand (24) des Getriebegehäuses (5). Die Rippen (47, 48) sind so angeordnet, daß ausreichend Platz vorhanden ist für den Austausch des gezeichneten Rads (1) gegen ein solches mit größerem Durchmesser, wie durch strichlierte Linien (49) gezeichnet. In der Mitte besitzt das Rahmenteil (6) eine Bohrung (50) zum ggf. verdrillungsfreien Verlegen der zum Elektromotor (15) geführten elektrischen Leitungen, gemäß der strichlierten Linie (51).

In der Ansicht gemäß Fig. 2 sind dieselben Teile mit den in Fig. 1 verwendeten Bezugszeichen versehen. An der Umfangswand (27) des Getriebegehäuses (5) sind im Flanschbereich entsprechende Augen (52) mit Schraubenlöchern (53) angeformt zur Aufnahme der Schrauben für die Befestigung der Innenwand (17) des Getriebegehäuses (5). Die beiden unteren Schraubenlöcher (54) dienen zur Aufnahme langer Durchgangsschrauben, mit welchen der Gehäuseteil (16) zusammen mit der Innenwand (17) an der Umfangswand (27) des Gehäuseteils (5) befestigt wird. Parallele, strichliert eingezeichnete Umlaufkanten (55) deuten den Umriß des Gehäusevorsprungs der Außenwand (24) des Getriebegehäuses (5) an, wobei innerhalb dieses Vorsprungs der Lagerhals (36) und die Nabe (3) eingeschlossen sind.

## Ansprüche

1. Radantrieb für Elektrofahrzeuge, insbesondere Hubstapler, wobei eine von einem in Radnähe mit vertikaler Drehachse (14) angeordneten Elektromotor (15) angetriebene Antriebswelle (11) eine in einer gehäusefesten Nabe (3) drehbar gelagerte Radachse (2) antreibt und wobei ein Rad (1) unter einem horizontalen Rahmen (6) angeordnet ist, der mit einem auf der Innenseite des Rads (1) etwa vertikal erstreckten Getriebegehäuse (5) fest verbunden ist, dadurch gekennzeichnet,
– daß eine Kegelrad-Getriebestufe (12) zwischen Elektromotor (15) und Antriebswelle (11) vorgesehen ist,
– daß die Drehachse (14) des Elektromotors (15) in einer vertikalen Ebene auf der dem Rad (1) abgewandten Seite des Getriebegehäuses (5) verläuft, und
– daß im Getriebegehäuse (5) wenigstens eine Stirnrad-Getriebestufe (9) aus außenverzahnten Stirnrädern, von denen eines auf der Radachse (2) sitzt, aufgenommen ist.

2. Radantrieb nach Anspruch 1, dadurch gekennzeichnet, daß die Antriebswelle (11) etwa waagrecht angeordnet ist.

3. Radantrieb nach Anspruch 1 oder 2, dadurch gekennzeichnet,
daß die Antriebswelle (11) mit ihrem äußeren Ende in der Außenwand (24) des Getriebegehäuses (5) und ferner mittels eines Radial-Axiallagers (22) in der Innenwand (17) des Getriebegehäuses (5) gelagert ist, und
daß das innere Ende der Antriebswelle (11) das Kegelritzel (20) trägt, welches mit dem Kegelrad (13) auf der Drehachse (14) des Elektromotors (15) die Kegelrad-Getriebestufe (12) bildet.

4. Radantrieb nach Anspruch 3, dadurch gekennzeichnet, daß die Kegelrad-Getriebestufe (12) in einem gesonderten, in periphärer Lage an der Innenseite des Getriebegehäuses (5) dichtend angeflanschten Gehäuseteil (16) eingebaut ist, und daß am Gehäuseteil (16) der Elektromotor (15) befestigt ist.

5. Radantrieb nach Anspruch 4, dadurch gekennzeichnet, daß der Gehäuseteil (16) an der Unterseite des Getriebegehäuses (5) angeordnet ist und oben einen waagrechten Deckelflansch (19) besitzt, auf welchem der Elektromotor (15) mit oben angeordnetem Kollektor aufgesetzt ist.

6. Radantrieb nach Anspruch 1, mit Stirnrad-Getriebestufe, dadurch gekennzeichnet, daß im Getriebegehäuse (5) zwei Stirnrad-Getriebestufen (9, 10) vorgesehen sind, wobei eine Zwischenwelle (8) für je ein Stirnrad beider Getriebestufen in einem zur Nabe (3) exzentrischen Lagerhals (36) gelagert ist, welcher wie die Nabe (3) mit der Außenwand (24) des Getriebegehäuses (5) einstückig verbunden ist.

7. Radantrieb nach Anspruch 6, mit einer nach innen offenen Radfelge (37), dadurch gekennzeichnet, daß zumindest die Nabe (3) und der Lagerhals (36) in das Innere der Radfelge (37) eintreten, wobei die Felge (37) auf einem über die Nabe vorspringenden Ende (40) der Radachse (2) drehfest aufgenommen ist.

8. Radantrieb nach Anspruch 6, dadurch gekennzeichnet, daß zumindest das große mit dem Stirnraddritzel (28) auf der Antriebswelle (11) kämmende Stirnrad (29) als Kunststoff-Spritzgußteil hergestellt ist, wobei es mit der Zwischenwelle (8) durch Angießen an ein Ende derselben verbunden ist.

## Claims

1. Wheel drive for electric vehicles, in particular stacker trucks, a drive shaft (11) driven by an electric motor (15) located in the vicinity of the wheel with a vertical axis of rotation (14) driving a wheel axle (2) mounted to rotate in a hub (3) integral with the housing and a wheel (1) being located below a horizontal frame (6), which is securely connected to a transmission housing (5) extending approximately vertically on the inside of the wheel (1), characterised in that
– a bevel gear transmission step (12) is provided between the electric motor (15) and drive shaft (11),
– the axis of rotation (14) of the electric motor (15) extends in a vertical plane on the side of the transmission housing (5) remote from the wheel (1) and
– at least one spur gear transmission step (9) consisting of externally toothed spur gears, of which one is seated on the wheel axle (2), is received in the transmission housing (5).

2. Wheel drive according to Claim 1, characterised in that the drive shaft (11) is disposed approximately horizontally.

3. Wheel drive according to Claim 1 or 2, characterised in that the drive shaft (11) is mounted with its outer end in the outer wall (24) of the transmission housing (5) and furthermore by means of a radial-axial bearing (22) in the inner wall (17) of the transmission housing (5), and that the inner end of the drive shaft (11) supports the bevel pinion (20), which with the bevel gear (13) on the axis of rotation (14) of the electric motor (15) forms the bevel gear transmission step (12).

4. Wheel drive according to Claim 3, characterised in that the bevel gear transmission step (12) is installed in a separate housing part (16) flange-mounted in a sealed manner, in a peripheral position, on the inside of the transmission housing (5), and that the electric motor (15) is attached to the housing part (16).

5. Wheel drive according to Claim 4, characterised in that the housing part (16) is disposed on the under side of the transmission housing (5) and at the top comprises a horizontal cover flange (19), on which is fitted the electric motor (15) with the collector disposed at the top.

6. Wheel drive according to Claim 1, with a spur gear transmission step, characterised in that two spur gear transmission steps (9, 10) are provided in the transmission housing (5), an intermediate shaft (8) for each spur gear of both transmission steps being mounted in a bearing neck (36), which is eccentric with respect to the hub (3), which bearing neck, like the hub (3), is connected in one piece to the outer wall (24) of the transmission housing (5).

7. Wheel drive according to Claim 6, with a wheel rim (37) open on the inside, characterised in that at least the hub (3) and the bearing neck (36) enter the inside of the wheel rim (37), the rim (37) being received in a non-rotary manner on one end (40) of the wheel axle (2) projecting beyond the hub.

8. Wheel drive according to Claim 6, characterised in that at least the large spur gear (29) meshing with the spur pinion (28) on the drive shaft (11) is produced as an injection moulded plastics part, it being connected to the intermediate shaft (8) by pouring onto one end thereof.

**Revendications**

1. Dispositif d'entraînement d'une roue pour des véhicules électriques, notamment pour des chariots gerbeurs, dans lequel un arbre menant (11), entraîné par un moteur électrique (15), disposé à proximité de la roue en ayant son axe de rotation (14) vertical, entraîne un axe de roue (2) monté tournant dans un moyeu (3) fixé à un carter et dans lequel une roue (1) est montée sous un châssis (6) horizontal et relié rigidement à une boîte de transmission (5) s'étendant à peu près verticalement du côté intérieur de la roue (1), caractérisé en ce qu'un étage de transmission à pignons coniques (12) est prévu entre le moteur électrique (15) et l'arbre menant (11) ;

en ce que l'axe de rotation (14) du moteur électrique (15) s'étend dans un plan vertical du côté de la boîte de transmission (5), qui est éloigné de la roue (1) ; et en ce que dans la boîte de transmission (5) est logé au moins un étage de transmission à pignons droits (9), constitué de pignons à dentures extérieures, dont l'un s'applique à l'axe de roue (2).

2. Dispositif d'entraînement d'une roue suivant la revendication 1, caractérisé en ce que l'arbre menant (11) est disposé à peu près horizontalement.

3. Dispositif d'entraînement d'une roue suivant la revendication 1 ou 2, caractérisé en ce que l'arbre menant (11) est monté par son extrémité extérieure dans la paroi extérieure (24) de la boite de transmission (5) et, en outre, au moyen d'un palier radial/axial (22), dans la paroi intérieure (17) de la boîte de transmission (5) ; et en ce que l'extrémité intérieure de l'arbre menant (11) porte le pignon conique (20) qui forme, avec le pignon conique (13) sur l'axe de rotation (14) du moteur électrique (15), l'étage de transmission à pignons coniques (12).

4. Dispositif d'entraînement d'une roue suivant la revendication 3, caractérisé en ce que l'étage de transmission à pignons coniques (12) est monté dans une partie particulière de la boîte de transmission (5), bridée de manière étanche en position périphérique sur le côté intérieur de la boîte de transmission (5) ; et en ce que le moteur électrique (15) est fixé à la partie du carter (16).

5. Dispositif d'entraînement d'une roue suivant la revendication 4, caractérisé en ce que la partie du carter (16) est disposée sur le côté inférieur de la boîte de transmission (5) et possède en haut une bride horizontale formant couvercle (19) sur laquelle est posé le moteur électrique (15) dont le collecteur est disposé en haut.

6. Dispositif d'entraînement d'une roue suivant la revendication 1 à étage de transmission à pignons droits, caractérisé en ce que dans la boîte de transmission (5) sont prévus deux étages de transmission à pignons droits (9, 10), un arbre intermédiaire pour chaque pignon droit des deux étages de transmission étant monté dans un collet formant palier (36) qui est excentré par rapport au moyeu (3) et qui, tout comme le moyeu (3), est d'une pièce avec la paroi extérieure (24) de la boîte de transmission (5).

7. Dispositif d'entraînement d'une roue suivant la revendication 6, pourvu d' une jante de roue (37) ouverte vers l'intérieur, caractérisé en ce qu'au moins le moyeu (3) et le collet formant palier (36) pénètrent à l'intérieur de la jante de roue (37), la jante (37) étant reçue sans possibilité de tourner sur une extrémité (40) de l'axe de la roue (2), qui dépasse du moyeu.

8. Dispositif d'entraînement d'une roue suivant la revendication 6, caractérisé en ce qu'au moins le grand pignon droit (29) engrenant avec le pignon de roue droite (28) sur l'arbre menant (11) est une pièce moulée par injection en matière plastique, qui est reliée à l'arbre intermédiaire (8) en étant moulée par coulée sur l'une des extrémités de celui-ci.

Fig.1

EP 0 335 885 B1

Fig. 2